# EUROPEAN PATENT APPLICATION

(11) **EP 1 369 391 A2**
(43) Date of publication of application: **10.12.2003**
(21) Application number: 03076690.1
(22) Date of filing: 02.06.2003
(51) Int. Cl.: C03B 23/11, C03B 23/08, C03B 23/18

(54) **Device for correct axial positioning of semi-finished glass vials**

(30) Priority: 03.06.2002 IT MI20021197
(71) Applicant: Euromatic s.r.l., 24047 Treviglio (Bergamo) (IT)
(72) Inventor: Vaporesi, Donino, 24047 Treviglio (Bergamo) (IT)
(74) Representative: De Gregori, Antonella

(57) **Abstract**

A device for correct axial positioning of semi-finished glass vials, wherein the vials (11) have a formed mouth and a semi-finished bottom and are held by supporting elements (17), comprises an actuator unit (20) for at least one gauge element (21) of the mouth of the vials (11) and a mechanism to reduce the load (22) of the supporting element (17) with synchronous action in relation to the actuator unit (20), said supporting element (17) being at least one and being constituted by gripping elements which grip the body of the vial (11).

## Description

The present invention relates to a device for correct axial positioning of semi-finished glass vials or similar container like bottles.

In the continuous production cycle of glass containers of the same size starting out with a tube, such as vials for pharmaceutical use, it is necessary to position the containers in an extremely precise way in relation to the supporting elements on the forming machine in order to carry out processing with the required tolerances and obtain a vial, or the like, which is perfectly centred in relation to its axis and is perfectly symmetrical, and is of the required length. In fact, an incorrect form could cause problems in the subsequent packaging machines both of poor stability and difficulty in centring in relation to the dispensers of the products being fed.

Machines for continuous forming of glass vials of the same size may generically be machines for production in series and carousel machines.

The supporting element generally consists of a self-centring chuck, which guarantees correct positioning of the glass container on its diameter, but which produces imprecise axial positioning of the container.

It is particularly known in carousel machines for forming glass vials of the same size to transfer a portion of semi-finished glass from a first carousel on which a mouth is produced to a second carousel where the portion is processed at the other end according to a flat surface, all with the aid of burners which maintain the portion of glass being processed hot. The vial is then unloaded ready for subsequent processing.

As a result the portion deposited on the secondary carousel, in which processing to grind the bottom takes place, must be positioned accurately with regard to its axis.

In particular, in the field of glass vials for pharmaceutical use, the required tolerances are extremely low.

The object of the present invention is therefore to produce a device for correct axial positioning of semi-finished glass vials which solves the aforesaid technical problems, with a simple structure adaptable to the various different forms which the containers may have.

Another object of the present invention is to produce a device for the correct axial positioning of semi-finished glass vials which allows perfectly shaped and stable containers to be obtained without any problems.

These objects according to the present invention are attained by producing a device for correct axial positioning of semi-finished glass vials as set forth in claim 1.

Further characteristics are provided in the dependent claims.

The characteristics and advantages of a device for the correct axial positioning of semi-finished glass vials according to the present invention shall become more apparent from the non-limiting exemplificative description hereunder, with reference to the attached schematic drawings, in which:
figure 1 is a schematic plan view of a carousel forming machine for glass vials, which shows a processing station constituted by the device for correct axial positioning of semi-finished glass vials, forming the object of the present invention;
figures 2 and 3 are respectively a side elevation and a front elevation of the device for correct axial positioning of semi-finished glass vials in a disengaged position;
figures 4 and 5 are views of the device in figures 2 and 3 in the working position.

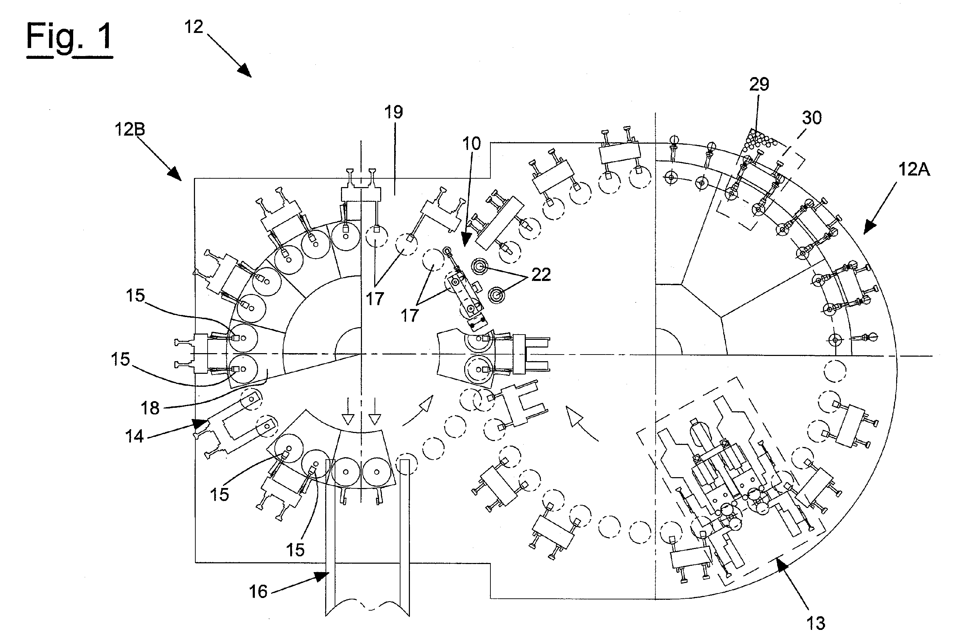

With reference to the figures, these show a device for correct axial positioning of semi-finished glass vials according to the present invention, indicated as a whole with 10, which may be placed at a station of a machine 12 for forming glass vials of various forms, shown schematically in figure 1.

The carousel machine 12, shown as a non-limiting example, comprises a first carousel 12A equipped with a feed station 30 for glass tubes 29 and with at least one station 13 to produce a mouth of a portion of glass, and a second carousel 12B, to which a semi-finished vial 11 is transferred to be processed at the other end in a grinding station 14, all with the aid of burners 15 which maintain the portion of glass being processed hot.

The vial 11 is fed to unloading means 16 ready for subsequent processing.

The device 10 is thus fed with ' vials being processed 11, equipped with formed mouth and semi-finished bottom.

The device 10 comprises a supporting element 17 for the glass vial 11, or container, which is positioned on a moving plate 18 in relation to a load-bearing structure 19 of the machine, and an actuator unit 20 for gauge elements 21 of the mouth of the vial.

The supporting element 17 may for example be constituted by a self-centring chuck, or by similar gripping elements, such as clamps, which grip the cylindrical body of the vial 11 to position it axially aligned with the gauge element 21, or gauge rod, housed slidingly inside this supporting element 17.

In the embodiment shown in figures from 2 to 5, the supporting element 17 is associated with a mechanism 22 to decrease the load of the clamp of the supporting element 17, for example connected to a control shaft 23, which acts in synchronism with the actuator unit 20.

The gauge element 21 may be adjustable in height via extensions, which may be applied alternatively or simultaneously at both the ends, to adapt to processing vials 11 of different heights.

The upper end, engaged with the mouth of the vial is equipped with a centring pin 25, designed to be inserted in proportion into the mouth of the vial, which may be replaced according to the type of vial to be processed.

The lower end of the gauge rod is constituted by a supporting base 26 for the action of a pusher 27 which is part of the actuator unit 20.

The actuator unit 20, which receives movement from the control shaft 23, comprises a cam 28 which interacts with a lever mechanism to control guided translation of the pushers 27 in relation to the load-bearing structure 19 of the machine 12 and therefore translation of the gauge elements 21.

The pushers 27 are also adjustable in height, for example via a threaded coupling, not shown, and are positioned on the load-bearing structure 19 in seats, provided for example with bearings, which guide translation. This stroke end adjustment of the pushers 27 is performed with the machine 12 at a standstill before starting the production cycle of the vials 11.

In a preferred embodiment of the machine 12 for producing vials, such as the one schematized in figure 1, all the processing or handling stations are arranged to act simultaneously on a pair of vials 11 positioned side by side.

The device 10 for correct axial positioning of semi-finished glass vials forming the object of the present invention, thus comprises, according to the illustrations in the figures, a pair of supporting elements 17 and a pair of pushers 27, operated by the same lever mechanism.

A possible embodiment of the lever mechanism, shown in figures from 2 to 5, comprises a first lever 31 hinged at one end in 32 to the load-bearing structure 19, equipped with a cam follower 33 and hinged at the opposite end to a tie-rod 34.

The tie-rod 34 is hinged, at its opposite end, to a supporting plate of the pushers 35, which transfers to said pushers 27 the movement induced by the shaft 23.

The device 10 for correct axial positioning of semi-finished glass vials may also comprise a cleaning unit 40 of the upper surface of the pushers 27, which in the embodiment shown in the figures acts on a pair of vials 11.

The cleaning unit 40 comprises a pressurized air feed duct 41 which is provided at a free end with one or more nozzles 42 positioned on a plane adjacent to the plane on which the pushers 27 translate, for example frontwardly, and aimed towards the upper surface of the pushers 27.

The jet of compressed air aimed at said surface, before this acts on the base 26 of the gauge element 21, guarantees the removal of any foreign bodies which could endanger correct axial positioning of the vial 11.

The vertical position of the nozzles 42 is adjustable in height via an adjustment plate 43 to adapt it to the height set for the pusher 27.

In previous processing stations or, alternatively, in the same station in which the device 10 of the present invention is positioned, the semi-finished vial 11 is positioned in the supporting element 17 with the mouth facing downward and is held in this element 17 via the clamping action performed on the sides. The vial 11 is above all positioned in the chuck in a slightly lower position in relation to the correct positioning.

As the subsequent processing to grind the bottom is performed at a pre-established distance from the moving plate 18 of the forming machine 12, the vial 11 is correctly positioned in the gripping element 17 when the mouth is, in relation to the grinding surface, at a distance more or less equal to the final length of the vial 11.

At the start of the operations for correct axial positioning of the semi-finished glass vial 11, the supporting element 17 is loosened via the mechanism 22 to decrease the load to allow the vial 11 to slide inside the supporting element 17.

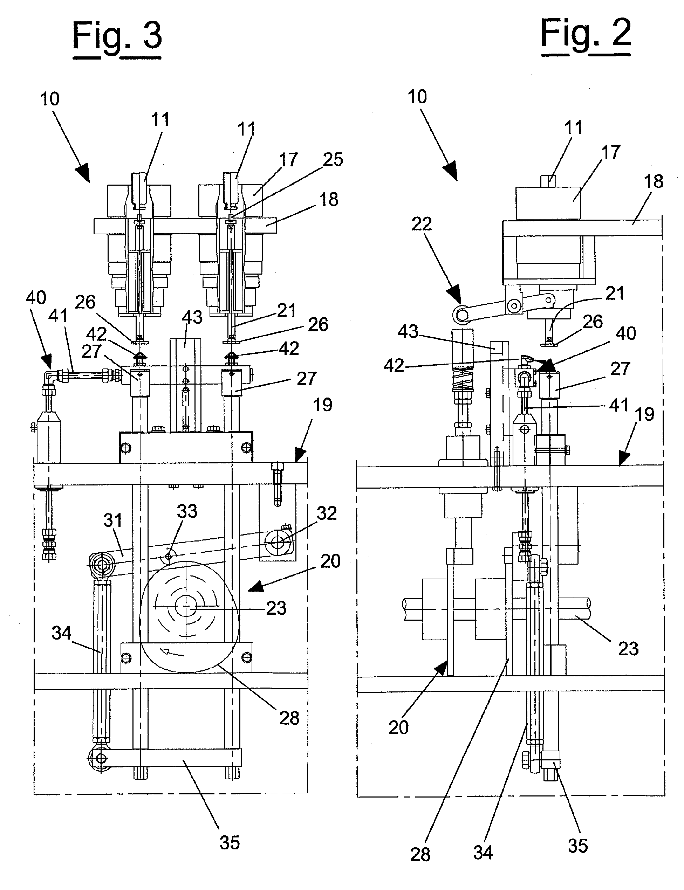

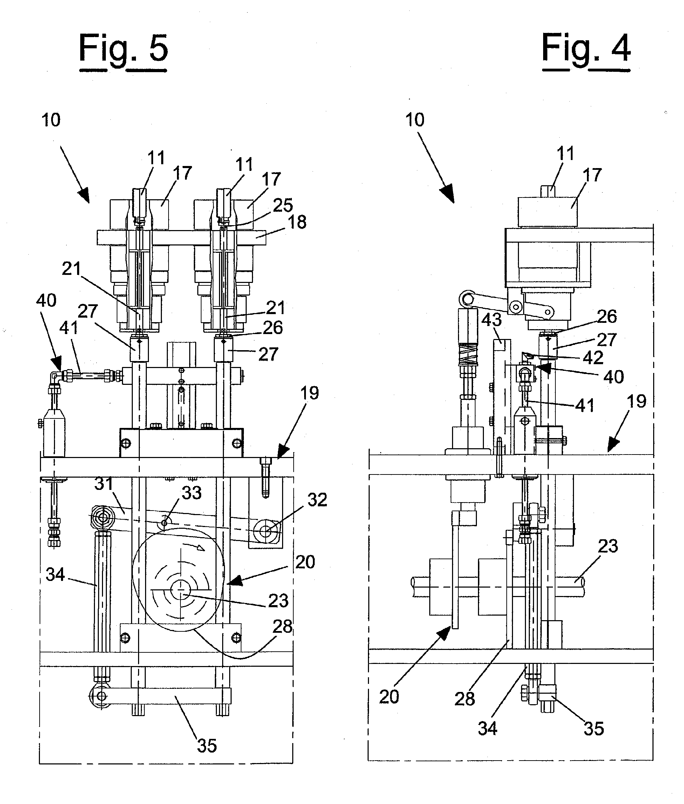

The gauge element 21, housed in the supporting element 17, which is in a lowered position disengaged from the vial 11 (figures 2 and 3), is pushed by the actuator unit 20 towards the mouth of the vial 11 to the previously set stroke end position (figures 4 and 5). The pin 25 is taken into contact with the mouth of the vial 11, which is pushed axially jointly with the movement of the gauge element 21.

The supporting element 17 is then clamped again around the vial 11, which is now correctly positioned to perform processing to grind the bottom with extremely limited tolerances on the length of the vial.

Finally, the return movement of the actuator unit 20 releases the gauge element 21 from the mouth of the vial 11.

The device for correct axial positioning of semi-finished glass vials forming the object of the present invention has the advantage of producing extremely precise positioning of the vial through simple and reliable mechanical means.

Moreover, the positioning device is easily adaptable to vials with different form, diameter, length and mouth.

The positioning device, forming the object of the present invention may advantageously be utilized in forming machines for vials of different types and may be positioned in different stations of the machine.

## Claims

1. Device for correct axial positioning of semi-finished glass vials, wherein said vials (11) have a formed mouth and a semi-finished bottom and are held by supporting elements (17), **characterized in that** it comprises an actuator unit (20) for at least one gauge element (21) for the mouth of said vials (11) and a mechanism to reduce the load (22) of said supporting element (17) with synchronous action in relation to said actuator unit (20), said supporting element (17) being at least one and being constituted by gripping elements which grip the body of said vial (11).

2. Device as claimed in claim 1, **characterized in that** said at least one supporting element (17) is positioned on a machine for forming glass vials (12) on a moving plate (18) in relation to a load-bearing structure (19) with which the actuator unit (20) is integral.

3. Device as claimed in claim 1, **characterized in that** said actuator unit (20) comprises at least one pusher (27), suitable to act on said at least one gauge element (21), a lever mechanism to control guided translation of said pushers (27) axially to the vial (11) and a cam (28) which receives movement from a control shaft (23).

4. Device as claimed in claim 1, **characterized in that** said at least one gauge element (21) is housed slidingly inside said at least one supporting element (17) axially to said vials (11).

5. Device as claimed in claim 4, **characterized in that** said gauge elements (21) are adjustable in height.

6. Device as claimed in claim 4, **characterized in that** said gauge elements (21) are provided at opposite ends with a centring pin (25), suitable to be inserted into the mouth of said vials (11) and with a supporting base (26) for the actuator unit (20).

7. Device as claimed in claim 3, **characterized in that** said pushers (27) are adjustable in height.

8. Device as claimed in claim 3, **characterized in that** said lever mechanism comprises a first lever (31) hinged at one end in (32) to a load-bearing structure (19), equipped with a cam follower (33) and hinged at the opposite end to a tie-rod (34) hinged at its opposite end to a supporting plate (35) of said pushers (27).

9. Device as claimed in claim 3, **characterized in that** it comprises a cleaning unit (40) of the upper surface of said at least one pusher (27).

10. Device as claimed in claim 9, **characterized in that** said cleaning unit (40) comprises a duct to feed pressurized air (41) which is provided at a free end with at least one nozzle (42).

11. Device as claimed in claim 10, **characterized in that** said at least one nozzle (42) is adjustable in height.

12. Device as claimed in claim 1, **characterized in that** said mechanism to reduce the load (22) of said supporting element (17) is connected to a control shaft (23).
